# EUROPÄISCHE PATENTSCHRIFT

(11) **EP 0 881 042 B1**
(45) Veröffentlichungstag und Bekanntmachung des Hinweises auf die Patenterteilung: **04.08.2004**
(21) Anmeldenummer: 98810416.2
(22) Anmeldetag: 07.05.1998
(51) Int. Cl.: B25C 1/14, F16F 1/377

(54) **Setzgerät mit Rückstellelement für den Treibkolben**
Fastener driving tool with return device for the drive piston
Outil de scellement avec un dispositif de retour pour la piston d'entraînement

(30) Priorität: 30.05.1997 DE 19722795
(43) Veröffentlichungstag der Anmeldung: 02.12.1998
(73) Patentinhaber: HILTI Aktiengesellschaft, 9494 Schaan (LI)
(72) Erfinder: Ehmig, Gerhard, 6830 Rankweil (AT); Dittrich, Tilo, 6805 Feldkirch-Gisingen (AT); Frommelt, Markus, 9494 Schaan (LI); Pfister, Norbert, 9462 Montlingen (CH)
(74) Vertreter: Wildi, Roland

(56) Entgegenhaltungen:
- EP-A- 0 110 233
- EP-A- 0 732 178
- EP-A- 0 762 011
- EP-A- 0 830 920
- DE-A- 1 908 735
- FR-A- 2 536 526
- US-A- 3 126 630
- US-A- 3 301 335
- US-A- 3 331 546

## Beschreibung

Die Erfindung betrifft ein Setzgerät gemäss dem Oberbegriff des Patentanspruchs 1.

Zum Eintreiben von nagelförmigen Befestigungselementen in harte Untergründe, wie Beton, Gestein, Stahl oder dergleichen werden Setzgeräte verwendet, die mittels hochgespannter Gase betrieben werden. Bei einer heute weit verbreiteten und aus Sicherheitsgründen bevorzugten Art solcher Setzgeräte wirken die hochgespannten Gase auf einen Treibkolben welcher, seinerseits mit den einzutreibenden Befestigungselementen zusammenwirkt. Während diese Geräte einerseits entscheidende Vorzüge aufweisen, sind sie mit dem Nachteil behaftet, dass nach jedem Eintreibvorgang der Treibkolben in seine Ausgangsstellung zurückgebracht werden muss. Aus diesem Grunde hat sich die Fachwelt schon seit Jahren mit Rückstellelementen für den Treibkolben beschäftigt. So ist aus der DE-OS 1 939 801 ein pulverkraftbetriebenes Setzgerät bekannt, dessen Treibkolben mittels eines Rückstellelementes nach jedem Eintreibvorgang in die Ausgangsstellung zurückverschiebbar ist. Das Rückstellelement wird von einer, den Schaft des Treibkolbens umgebenden elastischen Hülse gebildet, die sich von einem entgegen der Setzrichtung weisenden Anschlag einer Kolbenführung bis zu einer setzrichtungsseitigen Stirnfläche eines Kopfteiles des Treibkolbens erstreckt.

Die elastische Hülse ist umgeben von einem hohlzylindrischen Freiraum innerhalb dem sich die Hülse radial ausdehnen kann, wenn die Hülse axial zusammengedrückt wird. Beim Zusammendrücken der Hülse wird das Material aus dem die Hülse besteht komprimiert. Dabei entsteht eine starke Wärmeentwicklung, die zu einer frühzeitigen Alterung und zu einem hohen Verschleiss des Materials führt. Wenn der Freiraum aufgebraucht ist, d.h. wenn sich die Hülse nicht weiter radial ausdehnt, ist ein weiteres axiales Zusammendrücken der Hülse nicht mehr möglich. Die aus der DE-OS 1 939 801 bekannte, in Fig. 1 dargestellte Hülse lässt sich höchstens auf eine Länge zusammendrücken, die etwa 80% der ursprünglichen Länge des Rückstellelementes entspricht. Diese geringe axiale Versetzung des Treibkolbens ist insbesondere dann von Nachteil, wenn nagelförmige Befestigungselemente mit einer grossen Länge in einen Untergrund getrieben werden müssen.

Aus der US 3,331,546 ist ein Kolbenrückstellpuffer-System für Setzgeräte bekannt, bei dem eine Vielzahl von konischen, hohlen Scheibenelementen hintereinander liegend in Setzrichtung hinter dem Kolben angeordnet sind. Bei einem Setzvorgang werden die Scheibenelemente vollständig zusammengepresst, so dass Ihre Konusflanken parallel zueinander verlaufen. Um die in den Scheibenelementen eingeschlossene Luft bei der Komprimierung der Scheiben abführen zu können, sind in jedem Element Luftöffnungen vorgesehen.

Aus der FR 2 536 526 ist ein pulverbetriebenes Setzgerät bekannt, bei dem in Setzrichtung hinter dem Kolben mehrere elastische Ringe hintereinander liegend angeordnet sind. Diese Ringe weisen an ihren, dem Kolbenschaft abgewandten Aussenumfangsflächen umlaufende Vertiefungen auf.

Aus der US 3,301,335 ist ein Setzgerät bekannt, bei dem vor und hinter dem Kolben schockabsorbierende Elemente angeordnet sind. Die Elemente bestehen dabei aus einem geschäumten Plastikmaterial und weisen radial umlaufende Nuten oder Ausnehmungen auf.

Aus der DE 1 908 735 ist ein Gerät zum Eintreiben von Bolzen bekannt, bei dem in Setzrichtung hinter dem Kolben eine, den Kolbenhub begrenzende Pufferhülse angeordnet ist. Die Pufferhülse weist dabei eine einzelne umlaufende Ausnehmung auf, durch die der Hülsenmantel beim Stauchen radial ausdehnbar ist.

Aus der US 3,126,630 ist ein brennkraftbetriebenes Eintreibwerkzeug bekannt, bei dem in Setzrichtung hinter dem Kolben eine Mehrzahl von elastischen Pufferringen angeordnet ist, die jeweils durch Metallscheiben von einander getrennt sind.

Der Erfindung liegt die Aufgabe zugrunde, ein mittels hochgespannter Gase betätigbares Setzgerät zu schaffen, dessen Rückstellelement wirtschaftlich herstellbar ist, ein ausreichendes Zurückschieben des Treibkolbens in seine Ausgangsstellung nach jedem Eintreibvorgang gewährleistet, ein geringes Gewicht aufweist und um mehr als die Hälfte dessen ursprünglicher Länge zusammendrückbar ist.

Die Lösung dieser Aufgabe erfolgt durch ein Setzgerät, das die im kennzeichnenden Abschnitt des Patentanspruchs 1 angeführten Merkmale aufweist. Die Federung des Formteiles wird durch Biegung von Teilbereichen erreicht. Eine Materialkomprimierung mit den damit zusammenhängenden Nachteilen findet beim erfindungsgemässen Formteil nicht statt. Das Formteil weist einen sehr grossen Federweg auf, so dass sich dieses auf eine Länge zusammendrücken lässt, die 25% bis 50% der ursprünglichen Länge entspricht. Beim Zusammendrücken des Formteiles werden die Ausnehmungen in Längsrichtung des Formteiles verkleinert. Damit kann die Länge des zusammengedrückten Formteiles im wesentlichen der Summe der in Längsrichtung des Formteiles gemessenen Höhen aller Schichten aus elastischem Material entsprechen. Vorteilhafterweise sind die Ausnehmungen von umlaufend ausgebildeten Vertiefungen gebildet, die in Längsrichtung wechselweise an der Innenseite und der Aussenseite des Formteiles angeordnet sind. Dieses vorteilhaft ausgebildete Formteil gleicht einer Gummimanschette und weist einen sehr grossen Federweg auf. Die Verformung des Formteiles erfolgt ohne Knickung des elastischen Materials. Das Formteil kann derart weit zusammengedrückt werden, bis die Flächen, welche die Ausnehmungen begrenzen, aufeinanderliegen. Die Erstreckung der Vertiefungen kann senkrecht oder geneigt zur Längsrichtung des Formteiles verlaufen und die Wandstärke des Formteiles kann jeweils am tiefsten Punkt der Vertiefung geringer sein als im Bereich der die Vertiefungen begrenzenden Flächen des Formteiles. Wenigstens eine der umlaufenden Vertiefungen auf der Aussenseite und/oder der Innenseite des Formteiles kann mit einer Führungsscheibe zusammenwirken, die einerseits in die Vertiefung ragt, andererseits sich an dem Schaft des Treibkolbens oder der Innenwandung des Führungsrohres seitlich abstützt. An beiden Enden kann das Formteil mit elastischen Druckscheiben zusammenwirken, die neben Dämpfungseigenschaften auch Isolationseigenschaften aufweisen, damit die im Bereich des Kopfteiles des Treibkolbens vorhandene Wärme nicht direkt auf das Formteil übertragen wird. Eine hohe, in Längsrichtung des Formteiles wirkende Federkraft wird zweckmässigerweise dadurch erreicht, dass die umlaufend ausgebildeten Vertiefungen schraubenlinienförmig verlaufen.

Zur Unterstützung der vom Formteil aufgebrachten Rückstellkraft kann das Formteil mit wenigstens einer Schraubendruckfeder zusammenwirken, die vorzugsweise in wenigstens einer Vertiefung des Formteiles angeordnet ist. Die Schraubendruckfeder kann beispielsweise in der auf der Aussenseite oder auf der Innenseite des Formteiles angeordneten Vertiefung angeordnet sein. Es können auch zwei Schraubendruckfedem mit dem Formteil zusammenwirken, wobei jeweils eine Schraubendruckfeder in den Vertiefungen auf der Innenseite und der Aussenseite des Formteiles angeordnet sind. Die Querschnittsfläche des die Schraubendruckfeder bildenden Federdrahtes kann beispielsweise eine kreisförmige, elliptische, rechteckförmige oder quadratische Form haben.

Die Erfindung wird anhand von Zeichnungen, die ein Ausführungsbeispiel wiedergeben, näher erläutert. Es zeigen:
- Fig. 1: ein erfindungsgemässes Setzgerät in vereinfachter Darstellung;
- Fig. 2: einen vergrösserten Längsschnitt durch einen Teil einer Kolbenführung mit einem weiteren erfindungsgemässen Formteil, das umlaufende Vertiefungen aufweist, die in Längsrichtung wechselweise an der Innenseite und der Aussenseite des Formteiles angeordnet sind;

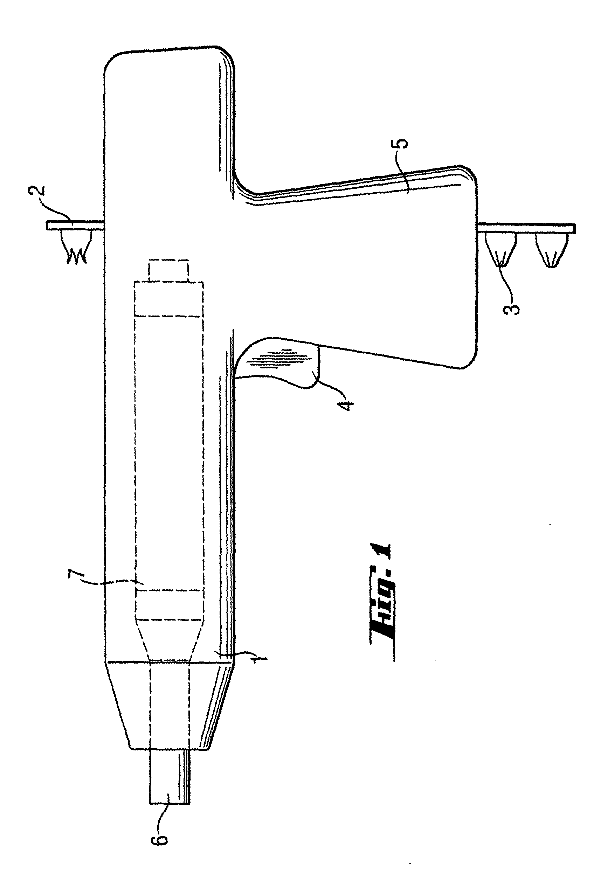

Das in der Fig. 1 schematisch dargestellte Setzgerät weist ein Gehäuse 1, einen einstückig mit dem Gehäuse 1 verbundenen Handgriff 5 und ein das Gehäuse 1 und den Handgriff 5 durchsetzendes, streifenförmiges Kartuschenmagazin 2 mit mehreren Kartuschen 3 auf. Im Übergangsbereich zwischen dem Gehäuse 1 und dem Handgriff 5 ist ein Betätigungsschalter 4 angeordnet, der dem Auslösen eines nicht dargestellten Zündmechanismus dient. Der setzrichtungsseitige Endbereich des Gehäuses 1 wird überragt von einer Bolzenführung 6, die zusammen mit einer sich an die Bolzenführung 6 entgegen der Setzrichtung anschliessenden Kolbenführung 7 gegenüber dem Gehäuse 1 entgegen der Setzrichtung in eine nicht gezeigte Arbeitsstellung versetzbar ist.

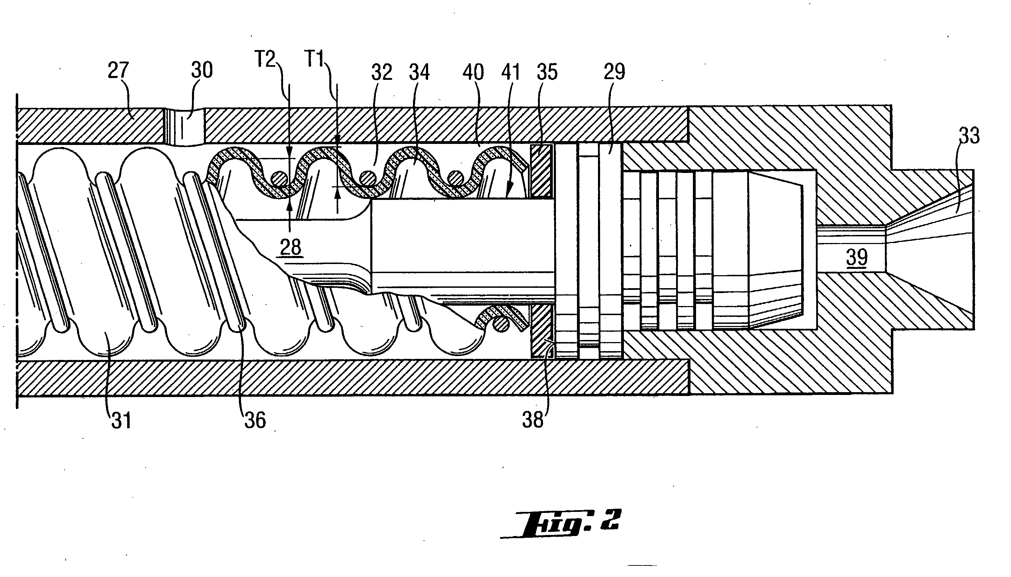

Die in Fig. 2 dargestellte Kolbenführung 27 weist eine zentrale, zylindrische Führungsbohrung 40, auf, die parallel zur Längserstreckung der Kolbenführung 27, verläuft. Ein Kartuschenlager 33 ist in einem der Setzrichtung gegenüberliegenden Endbereich der Kolbenführung 27, angeordnet und steht über einen Verbindungskanal 39, in direkter Verbindung mit der Führungsbohrung 40.

Ein dem Eintreiben von nicht dargestellten Befestigungselementen in einen ebenfalls nicht dargestellten Untergrund dienender Treibkolben 41 weist ein Kopfteil 29 und einen Schaft 28 auf, wobei der im wesentlichen dem Innendurchmesser der Führungsbohrung 40 entsprechende Aussendurchmesser des Kopfteiles 29, des Treibkolbens 41, grösser ist als der Durchmesser des Schaftes 28. Die Führungsbohrung 40, dient der Führung des Kopfteiles 29 beim axialen Versetzen des Treibkolbens 41. Im setzrichtungsseitigen Endbereich weist die Führungsbohrung 40 einen Anschlag (hier nicht zeichnerisch dargestellt) in Form einer kreisringformigen Fläche auf, die von der Setzrichtung abgewandt ist und der Abstützung des Kopfteiles 29 des Treibkolbens 41, unter Zwischenlage eines Rückstellelementes in Form eines Formteiles 31 dient. Im Bereich des Anschlages weist die Aussenwandung der Kolbenführung 27 eine Entlüftungsbohrung 30 auf, die dem Entlüften des setzrichtungsseitigen Teiles der Führungsbohrung 40 dient, wenn der Treibkolben 41 beim Setzvorgang in Setzrichtung beschleunigt wird.

Der Schaft 28 des Treibkolbens 41 wird in einer zentralen Bohrung (hier nicht zeichnerisch dargestellt) der Kolbenführung 27 im setzrichtungsseitigen Endbereich geführt. Diese zentrale Bohrung verläuft zur Führungsbohrung 40 der Kolbenführung 27 und zu einer zentralen Durchgangsbohrung (hier nicht zeichnerisch dargestellt) der Bolzenführung 6 koaxial. Der Durchmesser der Durchgangsbohrung entspricht im wesentlichen dem Durchmesser der zentralen Bohrung der Kolbenführung 27. Die zentrale Bohrung erstreckt sich im wesentlich entlang eines im Aussendurchmesser reduzierten Teiles der Kolbenführung 27 der von einem erweiterten Teil der Bolzenführung 6 umgeben ist.

Der in Fig. 2 dargestellte Treibkolben 41, befindet sich in seiner Ausgangsstellung. Ein dem Zurückverschieben des Treibkolbens 41 in seine Ausgangsstellung dienendes Rückstellelement in Form eines Formteiles 31, umgibt den zwischen einer setzrichtungsseitigen Stirnseite des Kopfteiles 29 des Treibkolbens 41, und dem Anschlag der Kolbenführung 27 liegenden Teil des Schaftes 28 des Treibkolbens 41 und wirkt formschlüssig mit zwei elastischen Druckscheiben 35, zusammen, die an den Stirnseiten des Formteiles 31, angeordnet sind. Der Aussendurchmesser der Druckscheiben 35, entspricht im wesentlichen dem Innendurchmesser der Führungsbohrung 40, und der Innendurchmesser der Druckscheiben 35, entspricht im wesentlichen dem Durchmesser des Schaftes 28, des Treibkolbens 41.

Die Länge des Formteiles 31 in der Ausgangsstellung des Treibkolbens 41 entspricht im wesentlichen dem Abstand zwischen dem Anschlag der Kolbenführung 27, und der setzrichtungsseitigen Stirnfläche 38 des Kopfteiles 29 abzüglich der Höhe beider Druckscheiben 35.

Das in Fig. 2 dargestellten Rückstellelemente ist als hohlzylindrische, Ausnehmungen 32, 34 aufweisendes Formteil 31 aus elastischern Material ausgebildet, wobei die Ausnehmungen 32, 34 derart angeordnet sind, dass sich in axialer Längsrichtung in jedem Längsschnitt über die gesamte Wandstärke elastisches Material und Ausnehmungen 32, 34 abwechseln.

Durch den erfindungsgemässen Aufbau des Formteiles 31, ergibt sich ein sehr grosser Federweg, so dass sich das Formteil 31 auf eine Länge zusammendrücken lässt, die 25% bis 50% der ursprünglichen Länge des Formteiles 31 entspricht. Beim Zusammendrücken des Formteiles 31 werden die Ausnehmungen 32, 34 in Längsrichtung des Formteiles 31 ganz zusammengedrückt, indem sich Teilbereiche des Formteiles 31 durch Biegung verformen, bis die einzelnen Schichten des elastischen Materials aufeinanderliegen. Die Länge des zusammengedrückten Formteiles 31 entspricht im wesentlichen der Summe der in Längsrichtung des Formteiles 31 gemessenen Höhen aller Schichten aus elastischem Material.

Die Ausnehmungen 32, 34 des aus der Fig. 2 bekannten Formteiles 31 sind von umlaufend ausgebildeten Vertiefungen T1, T2 gebildet, die in Längsrichtung wechselweise an der Innenseite und der Aussenseite des Formteiles 31 angeordnet sind. Die Erstreckung der Vertiefungen verläuft geneigt zur Längsrichtung des Formteiles 31. Das Formteil 31 wirkt mit einer Schraubendruckfeder 36 zusammen, die in den Vertiefungen auf der Aussenseite des Formteiles 31 liegt. Zwischen der setzrichtungsseitigen Stirnfläche 38 des Treibkolbens 41 und dem Formteil 31 befindet sich eine elastische Druckscheibe 35.

## Patentansprüche

1. Setzgerät, das mittels hochgespannter Gase betätigbar ist, mit einer Kolbenführung (7, 27, 47, 67), einem in der Kolbenführung (7, 27, 47, 67) axial versetzbaren, einen Schaft (8, 28, 48, 68) und ein Kopfteil (9, 29, 49, 69) aufweisenden Treibkolben (21, 41, 61, 81), sowie einem, den Schaft (8, 28, 48, 68) umgebenden, zwischen einem entgegen der Setzrichtung weisenden Anschlag (17) der Kolbenführung (7, 27, 47, 67) und der setzrichtungsseitigen Stirnfläche (18, 38, 58, 78) des Kopfteiles (9, 29, 49, 69) angeordneten Rückstellelement, wobei das Rückstellelement als hohlzylindrisches, Ausnehmungen (12, 32, 34, 52, 72) aufweisendes Formteil (11, 31, 51, 71) aus elastischem Material ausgebildet ist, wobei die Ausnehmungen (12, 32, 34, 52, 72) derart angeordnet sind, dass sich in axialer Längsrichtung betrachtet elastisches Material und Ausnehmungen (12, 32, 34, 52, 72) abwechseln, **dadurch gekennzeichnet, dass** die Ausnehmungen (32, 34) von umlaufend ausgebildeten Vertiefungen gebildet sind, die in Längsrichtung betrachtet wechselweise an der Innenseite und der Aussenseite des Formteiles (31) angeordnet sind, und dass die umlaufend ausgebildeten Vertiefungen schraubenlinienförmig verlaufen.

2. Gerät nach Anspruch 1, **dadurch gekennzeichnet, dass** in wenigstens einer Vertiefung eine Schraubendruckfeder (36) angeordnet ist.

## Claims

1. Setting tool which is operable by means of high tension gases, comprising a piston guide (7, 27, 47, 67), a drive piston (21, 41, 61, 81) which is axially transposable in the piston guide (7, 27, 47, 67), including a shaft (8, 28, 48, 68) and a head portion (9, 29, 49, 69), as well as a resetting element which surrounds the shaft (8, 28, 48, 68) and is arranged between a stop (17) of the piston guide (7, 27, 47, 67) which is oriented against the setting direction and the end surface at the setting side, and the resetting element is designed as a shape of plastic material with hollow cylindrical cutouts (12, 32, 34, 52, 72) in such a manner that, as seen in axial longitudinal direction, elastic material and cutouts (12, 32, 34, 52, 72) alternate, **characterised in that** the cutouts (32, 34) are formed by peripherally designed recesses and, as seen in the longitudinal direction, are alternately arranged at the inside and the outside of the shape (31), and the peripherally designed recesses extended helically.

2. Apparatus according to Claim 1, **characterised in that** a helical pressure spring (36) is arranged in at least one recess.

## Revendications

1. Outil de scellement pouvant être actionné au moyen de gaz à haute pression, avec un guide-piston (7, 27, 47, 67), un piston-poussoir (21, 41, 61, 81) déplaçable axialement dans le guide-piston (7, 27, 47, 67) et comprenant une partie de tête (9, 29, 49, 69) ainsi qu'avec un élément de rappel entourant la tige (8, 28, 48, 68) et disposé entre une butée (17) du guide-piston (7, 27, 47, 67) orientée à l'opposé de la direction de scellement et la face frontale côté direction de scellement (18, 38, 58, 78) de la partie de tête (9, 29, 49, 69), l'élément de rappel étant conformé en pièce moulée en matière élastique en forme de cylindre creux (11, 31, 51, 71) pourvue d'évidements (12, 32, 34, 52, 72), les évidements (12, 32, 34, 52, 72) étant disposés de façon que, vus dans la direction longitudinale axiale, la matière élastique et les évidements (12, 32, 34, 52, 72) alternent, **caractérisé en ce que** les évidements (32, 34) sont formés par des renfoncements périphériques qui, vus dans la direction longitudinale, se trouvent en alternance sur le côté intérieur et sur le côté extérieur de la pièce moulée (31), et **en ce que** les renfoncements périphériques suivent un tracé hélicoïdal.

2. Outil selon la revendication 1, **caractérisé en ce que** dans au moins un renfoncement est disposé un ressort de compression hélicoïdal (36).
